# EUROPÄISCHE PATENTANMELDUNG

(11) **EP 1 645 411 A1**
(43) Veröffentlichungstag der Anmeldung: **12.04.2006**
(21) Anmeldenummer: 05108055.4
(22) Anmeldetag: 02.09.2005
(51) Int. Cl.: B32B 33/00, B32B 1/08, B32B 27/32, B32B 27/30, H01M 8/02, B32B 27/08, B32B 5/14, B32B 7/12, F16L 11/04

(54) **Leitungssystem für Fluide und Gase in einer Brennstoffzelle**

(30) Priorität: 11.10.2004 DE 102004049652
(71) Anmelder: DEGUSSA AG, 40474 Düsseldorf (DE)
(72) Erfinder: Schmitz, Guido, Dr., 48249, Dülmen (DE); Häger, Harald Dr., 63579, Freigericht (DE); Ries, Hans Dr., 45772, Marl (DE); Farges, Olivier, 45768, Marl (DE)

(57) **Zusammenfassung**

Ein Element eines Leitungssystems einer Brennstoffzelle, das dadurch gekennzeichnet ist, dass die innerste Schicht I, die mit dem geförderten Medium in Kontakt steht, aus einer Polyolefmformmasse besteht, die mit einer Schicht II aus einer EVOH-Formmasse verbunden ist, wobei zwischen der Schicht I und der Schicht II der Verbund dadurch hergestellt ist, dass die Kontaktfläche der Schicht I ein Polyolefin enthält, das funktionelle Gruppen enthält, die ausgewählt sind aus Säureanhydridgruppen, Carbonsäuregruppen, N-Acyllactamgruppen, Epoxidgruppen und Trialkoxysilangruppen, lässt sich kostengünstig herstellen und hat eine gute Sperrwirkung gegenüber dem geförderten Medium.

## Beschreibung

Gegenstand der Anmeldung ist ein Element eines Leitungssystems einer Brennstoffzelle, das mit Fluiden und Gasen in Kontakt kommt.

Die sich immer weiter verschärfende Umweltgesetzgebung zwingt die Hersteller von Kraftfa.hrzeugen dazu, über neue Antriebskonzepte nachzudenken, da gerade auch NOₓ₋Emissionen immer stärker in den Focus des Gesetzgebers geraten. Ein mögliches alternatives Antriebskonzept stellt die Brennstoffzelle dar.

Brennstoffzellen sind in einer Vielzahl von Ausführungsformen seit langem Stand der Technik. Ihnen ist gemeinsam, dass dem Anodenraum ein Brennstoff und dem Kathodenraum Luft oder Sauerstoff zugeführt wird. Diese Reaktanden werden an den Elektroden katalytisch umgesetzt. Als Brennstoff können Wasserstoff, Methanol, Glykol, Methan, Butan, höhere Kohlenwasserstoffe usw. eingesetzt werden, jedoch werden nur bei ersterem so hohe Stromdichten erzielt, dass eine annähernd bei Raumtemperatur arbeitende Brennstoffzelle für den Antrieb eines Kraftfahrzeugs eingesetzt werden kann. Die übrigen Brennstoffe lassen sich nur in einer Mittel- oder Hochtemperaturbrennstoffzelle befriedigend umsetzen, was sich aber in erster Linie für stationäre Anlagen anbietet. In einem Kraftfahrzeug mit Elektroantrieb, das seinen Strom von einem Brennstoffzellenaggregat bezieht, welches mit Methanol oder Kohlenwasserstoffen betrieben werden soll, wird daher der Brennstoff üblicherweise in einem Reformer mit Wasserdampf bei höherer Temperatur zu Wasserstoff und Kohlendioxid umgesetzt, das Reaktionsgas vom Nebenprodukt Kohlenmonoxid befreit und das Wasserstoff CO₂-Gemisch in den Anodenraum geleitet. Derzeit wird hierfür die "proton exchange membrane fuel cell" favorisiert, bei der sich zwischen den porösen, katalysatorhaltigen Elektroden eine wassergesättigte saure Ionenaustauschermembran befindet. Jedoch wird auch für mobile Anwendungen an der Direktoxidation von Methanol gearbeitet, was einen Reformer überflüssig machen würde.

Bislang wurden die Leitungen für die Zufixhrung von Brennstoff üblicherweise aus Edelstahl hergestellt. Derartige Leitungen sind jedoch teuer.

Aus der JP 2002-213659 A sind Leitungen für Wasserstoff bekannt, die aus einer Polyolefininnenschicht, einer EVOH-Zwischenschicht und einer Polyamidaußenschicht bestehen. Das Problem der im allgemeinen fehlenden Haftung zwischen derartigen Schichten wird dort ansatzweise erkannt, indem die Verwendung eines nicht näher bezeichneten Klebstoffs angesprochen wird.

Demgegenüber stellte sich die Aufgabe, ein Element eines Leitungssystems einer Brennstoffzelle zur Verfügung zu stellen, das eine verbesserte Sperrwirkung gegenüber Kohlenwasserstoffen, Alkoholen und Wasserstoff besitzt und bei dem darüber hinaus die einzelnen Schichten von sich aus fest aufeinander haften.

Zudem sollte absolut sichergestellt sein, dass aus dem Material des Leitungssystems weitestgehend keine Komponenten herausgelöst werden, die mit dem Elektrolyten oder dem Anodenmaterial reagieren können, um eine Vergiftung des Katalysators oder eine unerwünschte Polarisierung zu verhindern.

Die obengenannte Aufgabe wird durch ein Element eines Leitungssystems einer Brennstoffzelle gelöst, bei dem die innerste Schicht I, die mit dem geförderten Medium in Kontakt steht, aus einer Polyolefmformmasse besteht, die mit einer Schicht II aus einer EVOH-Formmasse verbunden ist, wobei der Verbund darüber hinaus weitere Schichten enthalten kann, die ausgewählt sind aus
a) einer Schicht III aus einer Polyamidformmasse,
b) einer Schicht IV aus einer Formmasse aus einem funktionalisierten Polyolefin sowie
c) einer Schicht V aus einer Polyolefmformmasse, bei der das Polyolefin nicht funktionalisiert ist,
wobei zwischen der Schicht I und der Schicht II der Verbund dadurch hergestellt ist, dass die Kontaktfläche der Schicht I ein Polyolefin enthält, das funktionelle Gruppen enthält, die ausgewählt sind aus Säureanhydridgruppen, Carbonsäuregruppen, N-Acyllactamgruppen, Epoxidgruppen und Trialkoxysilangruppen.

Derartige Elemente sind beispielsweise ein Rohr oder ein rohrartiges Formteil, das ein Mehrschichtrohr sein kann, bei dem die innerste Schicht aus der Polyolefinformmasse besteht. Ein derartiges Rohr oder rohrartiges Formteil kann entweder als Glattrohr, das anschließend gegebenenfalls thermogeformt wird, oder als Wellrohr hergestellt werden. Weiterhin sind solche Bauteile zu nennen, in denen Fluide gelagert werden, etwa Vorratsgefäße. Weitere Elemente sind beispielsweise Anbindungselemente, etwa sogenannte Quickconnectoren, Adaptoren, Filter, Bauteile in Pumpen oder Bauteile in Ventilen.

Die erfindungsgemäßen Elemente können mit Hilfe der üblichen Verfahren zur Kunststoffverarbeitung hergestellt werden, beispielsweise mittels Coextrusion (z. B. Mehrschichtrohr), Blasformen bzw. Sonderformen hiervon wie Saugblasformen oder 3D-Schlauchmanipulation, wobei der Vorformling coextrudiert wird, Spritzgießen sowie Sonderverfahren hiervon wie z. B. Fluid Injections-Technik, oder Rotationssintern.

In einer ersten Ausführungsform besteht die Formmasse der Schicht I vollständig aus einem Polyolefin, das funktionelle Gruppen enthält, die ausgewählt sind aus Säureanhydridgruppen, Carbonsäuregruppen, N-Acyllactamgruppen, Epoxidgruppen und Trialkoxysilangruppen.

In einer zweiten Ausführungsform besteht die Formmasse der Schicht I aus einer Mischung aus einem unfunktionalisierten Polyolefin und einem Polyolefin, das diese funktionellen Gruppen enthält. Das Grundgerüst beider Polyolefine kann gleich oder unterschiedlich sein. Im letzteren Fall müssen aber die beiden Polyolefine so ähnlich sein, dass sie zumindest teilverträglich sind, da sonst die mechanischen Eigenschaften der Mischung verschlechtert sind.

In einer dritten Ausführungsform ist die Schicht I unterteilt in
a) eine Subschicht Ia aus einem unfunktionalisierten Polyolefin, die auf der Innenseite angeordnet ist und in direktem Kontakt mit dem geförderten Medium steht und
b) einer nachfolgenden Subschicht Ib, die das obengenannte Polyolefin mit den funktionellen Gruppen enthält und die direkt auf der Schicht II haftet. Die Subschicht Ib kann entweder ganz aus dem funktionellen Gruppen enthaltenden Polyolefin bestehen oder eine Mischung sein, wie sie oben für die zweite Ausführungsform beschrieben ist.

Eine vierte Ausführungsform leitet sich von der dritten Ausführungsform ab und ist dadurch gekennzeichnet, dass die Formmasse der Subschicht Ib neben dem funktionelle Gruppen enthaltenden Polyolefin ein weiteres Polymer enthält, das ausgewählt ist aus EVOH und Polymeren, die mit EVOH verträglich sind, wie z. B. PA6. Daneben kann auch zusätzlich noch unfunktionalisiertes Polyolefm enthalten sein, um die Haftung zur Subschicht Ia sicherzustellen.

Das erfmdungsgemäße Element kann beispielsweise von außen nach innen folgenden Schichtenaufbau besitzen:
II/I
III/II/I
III/II/Ib/Ia
IV/II/I
V/IV/II/Ib/Ia
IV/II/Ib/Ia

Für die Schicht III geeignete Polyamide sind dem Fachmann bekannt und in vielen Typen handelsüblich. Beispielsweise können PA46, PA66, PA68, PA610, PA612, PA88, PA810, PA1010, PA1012, PA1212, PA6, PA7, PA8, PA9, PA 10, PA11, PA12, hierauf basierende Copolyamide, verzweigte Polyamin-Polyamid-Copolymere sowie Mischungen hiervon verwendet werden. Hinsichtlich geeigneter Homo- und Copolyamide sowie geeigneter Polyamin-Polyamid-Copolymere sei auf die EP-A-1 216 826 sowie auf die EP-A-1 216 823 verwiesen, deren Offenbarung ausdrücklich mit einbezogen ist.

Die eingesetzte Polyamidformmasse kann maximal etwa 50 Gew.-% Zusatzstoffe enthalten, die ausgewählt sind aus schlagzähmachendem Kautschuk und/oder üblichen Hilfs- bzw. Zuschlagstoffen.

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Daneben kann die Formmasse noch kleinere Mengen von Hilfs- bzw. Zuschlagstoffen enthalten, die zum Einstellen bestimmter Eigenschaften benötigt werden. Beispiele hierfür sind Weichmacher, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer möglichen Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Beim Polyolefin der Subschicht Ia bzw. der Schicht V handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann auch eine Schlagzähkomponente wie z.B. EPM- oder EPDM-Kautschuk oder SEBS enthalten. Darüber hinaus können die üblichen Hilfs- und Zusatzstoffe enthalten sein. Das Polyolefin kann nach jedem bekannten Verfahren hergestellt werden, beispielsweise nach Ziegler-Natta, nach dem Phillips-Verfahren, mittels Metallocenen oder radikalisch.

Die Formmasse dieser Schichten kann entsprechend dem Stand der Technik vernetzt werden, um so eine Verbesserung der mechanischen Eigenschaften, z.B. der Kälteschlagzähigkeit, der Wärmeformbeständigkeit oder der Kriechneigung, oder der Permeabilität zu erzielen. Die Vernetzung erfolgt beispielsweise durch Strahlenvernetzung oder mittels Feuchtevernetzung von silangruppenhaltigen Polyolefinformmassen.

Beim funktionelle Gruppen enthaltenden Polyolefm der Schicht I bzw. der Subschicht Ib können die funktionellen Gruppen entweder durch Copolymerisation eines geeigneten Monomeren zusammen mit dem Olefin oder durch eine Pfropfreaktion eingebracht werden. Bei der Pfropfreaktion wird ein vorgebildetes Polyolefin auf bekannte Weise mit einem ungesättigten, funktionellen Monomeren und vorteilhafterweise einem Radikalspender bei erhöhter Temperatur umgesetzt.

Das vorgebildete Polyolefin kann eines der Art sein, wie es auch für die Subschicht Ia bzw. die Schicht V geeignet ist. Geeignete ungesättigte funktionelle Monomere sind beispielsweise Maleinsäureanhydrid, Itaconsäureanhydrid, Acrylsäure, Methacrylsäure, N-Methacryloylcaprolactam, Glycidylacrylat, Glycidylmethacrylat, Vinyltrimethoxysilan, Vinyltriethoxysilan und Methacryloyloxypropyltrimethoxysilan.

Geeignete Copolymerisate, bei denen das funktionelle Monomere in die Hauptkette eingebaut ist, sind beispielsweise Ethylen-Glycidyl(meth)acrylat-Copolymere, Ethylen-Itaconsäureanhydrid-Copolymere, Ethylen-Butylacrylat-Maleinsäureanhydrid-Copolymere, Ethylen-Vinylacetat-Maleinsäureanhydrid-Copolymere und Ethylen-(Meth)Acrylsäure-(Meth)acrylsäureester-Copolymere.

EVOH ist seit langem bekannt. Es ist ein Copolymer aus Ethylen und Vinylalkohol und wird manchmal auch als EVAL bezeichnet. Der Ethylengehalt im Copolymeren beträgt in der Regel 25 bis 60 Mol-% und insbesondere 28 bis 45 Mol-%. Eine Vielzahl von Typen ist im Handel erhältlich. Beispielsweise sei auf die Firmenschrift "Introduction to Kuraray EVAL^{™} Resins", Version 1.2/9810 der Firma Kuraray EVAL Europe verwiesen.

Das EVOH wird in der Regel durch Verseifen von Ethylen-Vinylacetat-Copolymeren hergestellt. Aus Gründen der besseren Verarbeitbarkeit kann als EVOH erfindungsgemäß auch ein teilverseiftes Ethylen-Vinylacetat-Copolymer eingesetzt werden, bei dem die Verseifung zu mindestens 60 %, bevorzugt zu mindestens 80 % und besonders bevorzugt zu mindestens 90 % durchgeführt wurde. Eine bessere Verarbeitbarkeit kann auch durch Zumischen von Polyvinylacetat, Ethylen-Polyvinylacetat-Copolymeren oder Polyamiden erzielt werden. Darüber hinaus kann die EVOH-Formmasse alle aus dem Stand der Technik bekannten weiteren Zusätze enthalten, beispielsweise auch Schichtsilikate. Der Anteil an EVOH in der Formmasse sollte mindestens 50 Gew.-%, bevorzugt mindestens 60 Gew.-%, besonders bevorzugt mindestens 75 Gew.-% und ganz besonders bevorzugt mindestens 90 Gew.-% betragen.

Eine der Schichten des Verbundes, bevorzugt die innerste Schicht, kann antielektrostatisch ausgerüstet sein, was gemäß dem Stand der Technik durch Einmischen von Ruß, Graphitfibrillen oder anderer geeigneter leitfähiger Partikel in die Formmasse bewerkstelligt werden kann.

Das erfmdungsgemäße Leitungssystem bzw. dessen einzelne Elemente lässt sich kostengünstig herstellen. Es hat darüber hinaus auch ein geringes Gewicht, was gerade bei mobiler Verwendung von Vorteil ist.

Die Erfindung bezieht sich auch auf ein Brennstoffzellensystem, das ein erfindungsgemäßes Element enthält, beispielsweise für den Antrieb eines Kraftfahrzeugs.

## Patentansprüche

1. Element eines Leitungssystems einer Brennstoffzelle,
**dadurch gekennzeichnet,**
**dass** die innerste Schicht I, die mit dem geförderten Medium in Kontakt steht, aus einer Polyolefmformmasse besteht, die mit einer Schicht II aus einer EVOH-Formmasse verbunden ist, wobei zwischen der Schicht I und der Schicht II der Verbund **dadurch** hergestellt ist, dass die Kontaktfläche der Schicht I ein Polyolefin enthält, das funktionelle Gruppen enthält, die ausgewählt sind aus Säureanhydridgruppen, Carbonsäuregruppen, N-Acyllactamgruppen, Epoxidgruppen und Trialkoxysilangruppen.

2. Element eines Leitungssystems einer Brennstoffzelle gemäß Anspruch 1,
**dadurch gekennzeichnet,**
**dass** es weitere Schichten enthält, die ausgewählt sind aus
a) einer Schicht III aus einer Polyamidformmasse,
b) einer Schicht IV aus einer Formmasse aus einem funktionalisierten Polyolefin sowie
c) einer Schicht V aus einer Polyolefmformmasse, bei der das Polyolefin nicht funktionalisiert ist.

3. Element eines Leitungssystems einer Brennstoffzelle gemäß einem der vorhergehenden Ansprüche,
**dadurch gekennzeichnet,**
**dass** es ein Mehrschichtrohr, ein Vorratsgefäß, ein Anbindungselement, ein Adapter, ein Filter, ein Bauteil einer Pumpe oder ein Bauteil eines Ventils ist.

4. Element eines Leitungssystems einer Brennstoffzelle gemäß einem der vorhergehenden Ansprüche,
**dadurch gekennzeichnet,**
**dass** eine der Schichten des Verbundes antielektrostatisch ausgerüstet ist.

5. Brennstoffzellensystem, das ein Element gemäß einem der vorhergehenden Ansprüche enthält.

6. Brennstoffzellensystem für den Antrieb eines Kraftfahrzeugs, das ein Element gemäß einem der Ansprüche 1 bis 4 enthält.
